# EUROPEAN PATENT APPLICATION

(11) **EP 1 912 384 A1**
(43) Date of publication of application: **16.04.2008**
(21) Application number: 07118002.0
(22) Date of filing: 05.10.2007
(51) Int. Cl.: H04L 12/46, H04L 12/40

(54) **A system management bus port router**

(30) Priority: 09.10.2006 US 539760
(71) Applicant: Honeywell International Inc., Morristown, NJ 07962 (US)
(72) Inventor: Cooley, Stephen, Seminole, FL 33775 (US)
(74) Representative: Buckley, Guy Julian

(57) **Abstract**

A method of sending data packets between a control processor and a plurality of peripheral components comprising retrieving information embedded in a command data packet formatted in a first protocol at a router, forming a reformatted command data packet at the router, and transferring the reformatted command data packet from the router. The reformatted command data packet is formatted according to a second protocol and the reformatted command data packet includes the retrieved information.

## Description

This application is related to United States Patent Application Serial No. 11/469,176 (Attorney Docket No. H0011947.72856) having a title of "A SYSTEM MANAGEMENT BUS PORT SWITCH" (also referred to here as the "11/469,176 Application") filed on August 31, 2006. The 11/469,176 Application is hereby incorporated herein by reference. This application is also related to United States Patent Application Serial No. 11/469,207 (Attorney Docket No. H0012926-5802) having a title of "A METHDO TO EMBED PROTOCOL FOR SYSTEM MANAGEMENT BUS IMPLEMENTATION" (also referred to here as the "11/469,207 Application") filed on August 31, 2006. The 11/469,207 Application is hereby incorporated herein by reference.

### BACKGROUND

An embedded computer system usually includes routers which are used to transfer data packets and commands between components in the system.

It is useful for the peripheral components to have access to a control processor or master of the peripheral component. For example, system designers sometimes want the peripheral components to transfer data into and out of buffers located within the control processor memory. There are some systems in which the peripheral components are required to maintain an active role in sending status and configuration information to a control processor. This is typically done by master or control processor continuously or periodically polling the peripheral components to determine the health and status of each peripheral component.

It is useful to maintain the status checks on the peripheral components even if the primary bus is disrupted.

### SUMMARY

In one embodiment, a method of sending data packets between a control processor and a plurality of peripheral components comprises retrieving information embedded in a command data packet formatted in a first protocol at a router, forming a reformatted command data packet at the router, and transferring the reformatted command data packet from the router. The reformatted command data packet is formatted according to a second protocol and the reformatted command data packet includes the retrieved information.

### DRAWINGS

Figure 1 is a block diagram of one embodiment of a system to implement a router in accordance with the present invention.

Figure 2 is a block diagram of one embodiment of a system to implement a router in accordance with the present invention.

Figures 3-5 are block diagrams of embodiments of data packets transferred in a router in accordance with the present invention.

Figure 6 is a block diagram of one embodiment of a System Management Bus interface in accordance with the present invention.

Figure 7 is a flow diagram of one embodiment of a System Management Bus state machine in accordance with the present invention.

Figure 8 is a flow diagram of one embodiment of a method of sending data packets between a control processor and a plurality of peripheral components in accordance with the present invention.

Figures 9A-9B are flow diagrams of one embodiment of a method of forming a reformatted command data packet at the router in accordance with the present invention.

Figure 10 is a flow diagram of one embodiment of a method of receiving a reformatted data packet at a peripheral component in accordance with the present invention.

Figure 11 is a flow diagram of one embodiment of a method of receiving a reformatted data packet at a peripheral component in accordance with the present invention.

Figure 12 is a flow diagram of one embodiment of a method of transferring address information in accordance with the present invention.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

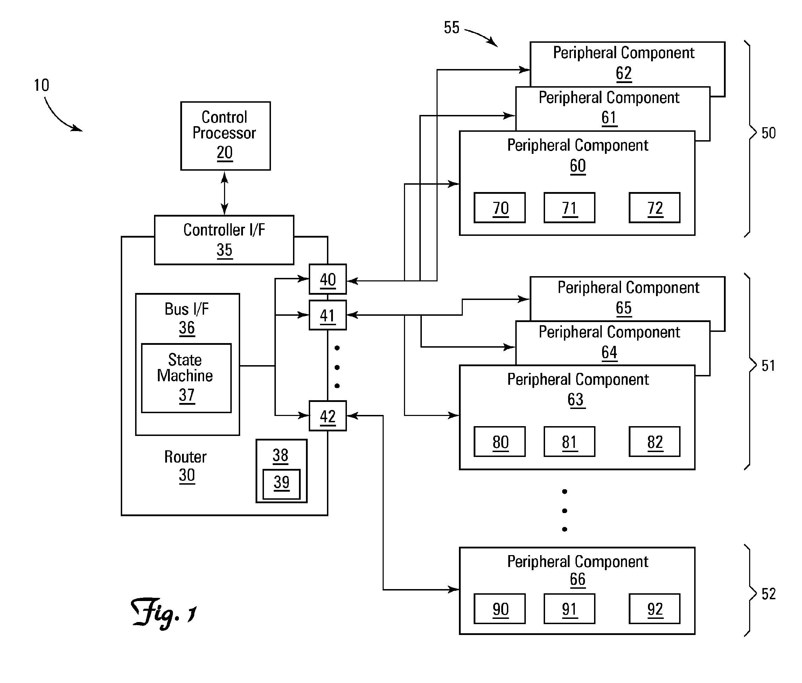

Figure 1 is a block diagram of one embodiment of a system 10 to implement a router 30 in accordance with the present invention. The system 10 includes a control processor 20, a router 30 and a plurality of peripheral components represented generally by the numeral 55. The control processor 20 is communicatively coupled to the router 30. The control processor 20 sends data packets to the router 30 and each peripheral component in the plurality of peripheral components 55 sends data packets to the control processor 20. The term data packet is also referred to herein as a "command data packet," in which a master initiates a read command or a write command to which a slave responds. The command data packet includes embedded information such as, a slave address, a command code, a byte count, an address offset, a block length, a data byte and a packet error code.

The router 30 includes a controller interface (I/F) 35, a bus interface (I/F) 36, and a plurality of ports generally represented by ports numbered 40, 41, and 42. The bus interface 36 includes a master/slave state machine 37 (shown as State Machine 37 in Figure 1). The router 30 also includes a computer-readable medium 38 having computer-executable instructions 39, such as software, firmware or other program code for performing the methods described herein. The computer-readable medium 38 and the computer-executable instructions 39 are shown separate from the bus interface (I/F) 36 and the master/slave state machine 37, however, in one implementation of this embodiment, the computer-readable medium 3 8 and the computer-executable instructions 39 are integral to the a bus interface (I/F) 36 and the master/slave state machine 37.

The controller interface 35 receives data packets that are formatted according to a first protocol from the control processor 20. The bus interface 36 reformats the received data packets from the first protocol to a second protocol. Each data packet received from the control processor 20 is formatted according to the second protocol and transferred to one or more of the plurality of peripheral components 55 via one of the communicatively coupled ports 40, 41 or 42. The data packets that are reformatted according the second protocol are referred to herein as "reformatted data packets." Likewise, each data packet received from one of the plurality of peripheral components 55 via one of the communicatively coupled ports 40, 41 or 42 is formatted according to the second protocol and transferred to the control processor 20. The master/slave state machine 37 in the bus interface 36 controls the functionality of the bus interface 36 during the reformatting of the data packets.

The plurality of peripheral components 55 comprises subsets 50, 51, and 52 of the plurality of peripheral components 55. The subset 50 of the plurality of peripheral components 55 is communicatively coupled to port 40 of the router 30. The subset 50 includes peripheral components 60-62. A data packet transferred via port 40 is sent to the peripheral components 60-62.

The subset 51 of the plurality of peripheral components 55 is communicatively coupled to port 41 of the router 30. The subset 51 includes peripheral components 63-65. A data packet transferred via port 41 is sent to the peripheral components 63-65.

Likewise, the subset 52 of the plurality of peripheral components 55 is communicatively coupled to port 42 of the router 30. The subset 52 includes peripheral component 66. A data packet transferred via port 42 is sent to the peripheral component 66. In one implementation of this embodiment, the subset 52 includes more than one peripheral component.

In one implementation of this embodiment, the router 30 includes twelve ports. In another implementation of this embodiment, the router 30 includes twelve ports and each port is communicatively coupled to five peripheral components.

Each of the plurality of peripheral components 55 includes one or more internal locations, such as memory locations, status registers, and configuration registers. In the illustrated embodiment, the peripheral component 60 includes internal locations 70, 71 and 72, the peripheral component 63 includes internal locations 80, 81 and 82, and the peripheral component 66 includes internal locations 90,91 and 92. The internal locations in the peripheral components 61, 62, 64, and 65 are not shown in Figure 1. The control processor 20 accesses configuration and control registers at the internal locations. For example, control processor 20 accesses configuration and control registers at the internal locations 70-72, 80-82, 90-92, in the peripheral components 60, 63, and 66, respectively.

The master/slave state machine 37 in the router 30 reformats data packets received from the control processor 20. Specifically, the bus interface 36 modifies the received data packets that are formatted according to the first protocol so that the data packets sent from the router 30 are formatted according to a second protocol. In this manner the bus interface 36 and the master/slave state machine 37 in the router 30 transfer commands between the control processor 20 and the plurality of peripheral components 55. The controller interface 35 receives the address of the peripheral component 60, 61, 62, 63, 64, 65, or 66 and data to be sent to the addressed peripheral component 60, 61, 62, 63 64, 65, or 66. The addressed peripheral component 60, 61, 62, 63 64, 65, or 66 is referred to here as "targeted peripheral component 60, 61, 62, 63 64, 65, or 66." The plurality of peripheral components 55 are slave devices for the router 30 when the control processor 20 initiates the data packet and one of the plurality of peripheral components 55 completes the data packet.

Likewise, when one of the plurality of peripheral components 55 initiates the data packet and the control processor 20 completes the data packet, the bus interface 36 modifies the received data packets that are formatted according to the second protocol so that the data packets sent from the router 30 are formatted according to a first protocol. In this case, the control processor 20 is a slave device for the router 30 and the peripheral component 60, 61, 62, 63, 64, 65, or 66 is the master for the router 30.

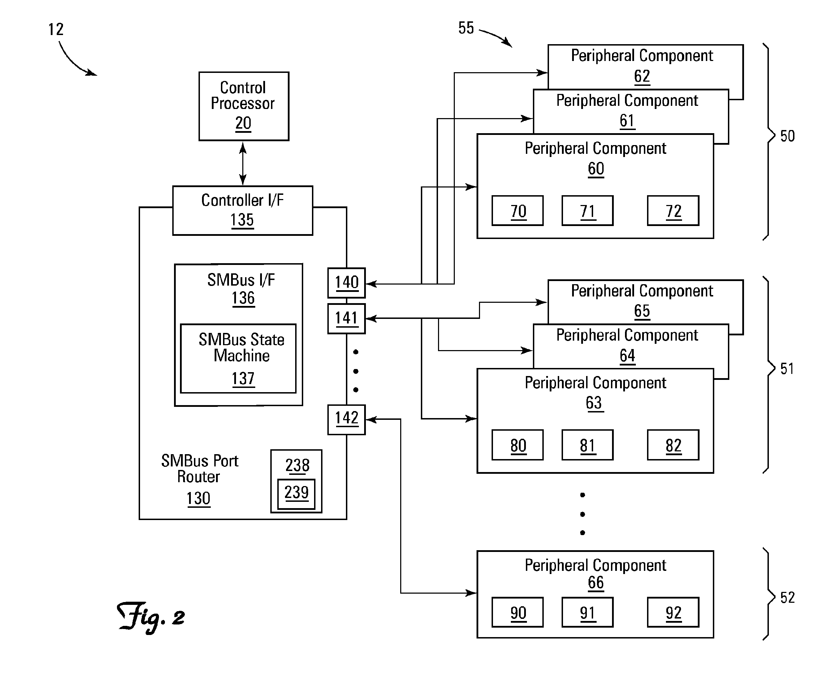

In one implementation of this embodiment, the first protocol data packet received from the controller 20 is a RS232 data packet. In another implementation of this embodiment, the first protocol data packet received from the controller 20 is formatted according to a Spacewire protocol. In yet another implementation of this embodiment, the first protocol data packet received from the controller 20 is formatted according to a Rapid IO protocol. In yet another implementation of this embodiment, the first protocol data packet received from the controller 20 is formatted according to a Spacewire protocol and the second protocol data packet sent from the router 30 is formatted according to the System Management Bus protocol. A system to implement the latter embodiment is shown in Figure 2.

A control processor 20 sends data packets to the peripheral components 60-66 via a router 30 in the system 10. In another implementation of this embodiment, the control processor 20 sends data packets to the peripheral components 60-66 via the router 30 in order to conduct an interrogation of system status and configuration. In yet another implementation of this embodiment, the control processor 20 sends data packets to the peripheral components 60-66 via the router 30 in order to conduct an interrogation of system status and configuration without disrupting the activity on the primary bus. In one implementation of this embodiment, the control processor conducts an interrogation of system status and configuration via the alternative bus when the primary bus fails or slows down due to heavy usage. In another implementation of this embodiment, the control processor 20 conducts all interrogations of system status and configuration via the alternative bus.

In yet another implementation of this embodiment, a peripheral component 60, 61, 62, 63, 64, 65, or 66 initiates sending data packets to the control processor 20 via the router 30 in the system 10. In one such implementation when a peripheral component 60 initiates sending data packets as described herein, the peripheral component is reporting status and/or configuration information to the control processor. In another such implementation when a peripheral component 60 initiates sending data packets as described herein, the peripheral component is requesting interrogation by the control processor. Thus, the term "initiate," when used with respect to the peripheral component, is interchangeable with the terms "report" and/or "request interrogation." In an exemplary implementation of this embodiment, the peripheral component 60, 61, 62, 63, 64, 65, or 66 reports to the control processor 20 by sending data packets to the control processor 20 via the router 30 in order to send status data, for example, system status and configuration, to the control processor 20. In another exemplary implementation of this embodiment, the peripheral component 60, 61, 62, 63, 64, 65, or 66 reports to the control processor 20 by sending data packets to the control processor 20 via the router 30 in order to send status data to the control processor 20 without disrupting the activity on the primary bus. In yet another exemplary implementation of this embodiment, the peripheral component 60, 61, 62, 63, 64, 65, or 66 requests interrogation by the control processor about the system status and configuration of the peripheral component via the alternative bus when the primary bus fails or slows down due to heavy usage. In another implementation of this embodiment, the peripheral component 60, 61, 62, 63, 64, 65, or 66 makes all interrogation requests and responds to all interrogations by the control processor via the alternative bus.

Figure 2 is a block diagram of one embodiment of a router system 12 to implement a router in accordance with the present invention. Router system 12 is an embodiment of system 10 in which the router 30 is replaced by a System Management Bus (SMBus) port router 130, also referred to here as "SMBus router 130" and "router 130." The SMBus port router 130 includes a SMBus controller interface (I/F) 135, a SMBus interface (I/F) 136, and a plurality of ports 140-142. The SMBus interface 136 includes a SMBus master/slave state machine 137 (shown as SMBus State Machine 137 in Figure 2). The router 30 also includes a computer-readable medium 238 having computer-executable instructions 239, such as software, firmware or other program code for performing the methods described herein. The computer-readable medium 238 and the computer-executable instructions 239 are shown separate from the bus interface (I/F) 136 and the SMBus master/slave state machine 137, however, in one implementation of this embodiment, the computer-readable medium 238 and the computer-executable instructions 239 are integral to the bus interface (I/F) 136 and SMBus master/slave state machine 137.

Specifically, within the SMBus port router 130, the bus interface 36 is replaced by a System Management Bus interface 136 and the master/slave state machine 37 is replaced by a System Management Bus master/slave state machine 137 that controls the functionality of the System Management Bus interface 136. Thus, router system 12 includes the control processor 20, the SMBus port router 130 and the plurality of peripheral components 55 communicatively coupled to one of the ports 140, 141, or 142 of the SMBus port router 130. The control processor 20 is communicatively coupled to the SMBus port router 130. The control processor 20 sends data packets to the SMBus port router 130. In one implementation of this embodiment, the router system 12 is implemented when a failure of a primary bus is detected or when interrogation of system status and configuration is implemented without disrupting the activity on the primary bus.

The plurality of peripheral components 55 comprises subsets 50, 51, and 52 as described above with reference to Figure 1. The subset 50 is communicatively coupled to port 140 of the router 130. A data packet transferred via port 140 is sent to the peripheral components 60-62. The subset 51 is communicatively coupled to port 141 of the router 130. A data packet transferred via port 141 is sent to the peripheral components 63-65. Likewise, the subset 52 is communicatively coupled to port 142 of the router 130. A data packet transferred via port 142 is sent to the peripheral component 66.

The controller interface 135 receives data packets that are formatted according to a first protocol from the control processor 20. In one implementation of this embodiment, the first protocol is a Spacewire protocol. In another implementation of this embodiment, the first protocol is Rapid IO. In another implementation of this embodiment, the first protocol is RS232 data packets. The bus interface 136 reformats the received data packets from the first protocol to a System Management Bus (SMBus) protocol. A data packet formatted according to the SMBus protocol is transferred to a subset 50, 51, or 52 of the plurality of peripheral components 55 via the respective ports 140, 141 or 142. The SMBus master/slave state machine 137 controls the functionality of the SMBus interface 136 during the reformatting of the data packets.

The SMBus master/slave state machine 137 in the router 130 reformats data packets received from the control processor 20. Specifically, the SMBus interface 136 modifies the received data packets that are formatted according to the first protocol so that the data packets sent from the router 130 to the plurality of peripheral components 55 are formatted according to a second protocol. In this manner the SMBus interface 136 and the SMBus master/slave state machine 137 in the router 130 transfer commands between the control processor 20 and the plurality of peripheral components 55. The controller interface 135 receives the address of the peripheral component 60, 61, 62, 63, 64, 65, or 66 and data to be sent to the addressed peripheral component 60, 61, 62, 63 64, 65, or 66. The addressed peripheral component 60, 61, 62,63 64, 65, or 66 is referred to here as "targeted peripheral component 60, 61, 62, 63 64, 65, or 66." The plurality of peripheral components 55 are slave devices for the router 130 when the control processor 20 initiates the data packet and the peripheral component 60, 61, 62, 63, 64, 65, or 66 completes the data packet.

Likewise, when the peripheral component 60, 61, 62, 63, 64, 65, or 66 initiates the data packet and the control processor 20 completes the data packet, the bus interface 136 modifies the received data packets that are formatted according to the second protocol so that the data packets sent from the router 130 are formatted according to a first protocol. In this case, the control processor 20 is a slave device for the router 130 and the peripheral component 60, 61, 62, 63, 64, 65, or 66 is the master for the router 130.

In one implementation of this embodiment, a primary bus in the router system 12 uses an embedded system primary bus architecture to transfer commands and data between the control processor 20 and the plurality of peripheral components 55. When the primary bus is locked-up or producing errors during a transfer of data packets, the control processor 20 uses the router 130, which functions as an alternate bus for the control processor 20. In order to function as an alternative bus to the primary bus, the SMBus master/slave state machine 137 in the router 130 reformats data packets. Specifically, the bus interface 136 modifies the received data packets that are formatted according to the first protocol so that the data packets sent from the router 130 are formatted according to the SMBus protocol. In this manner the SMBus interface 136 and the SMBus master/slave state machine 137 in the SMBus port router 130 provide an alternative bus to the embedded system primary bus architecture to transfer commands between the control processor 20 and the plurality of peripheral components 55.

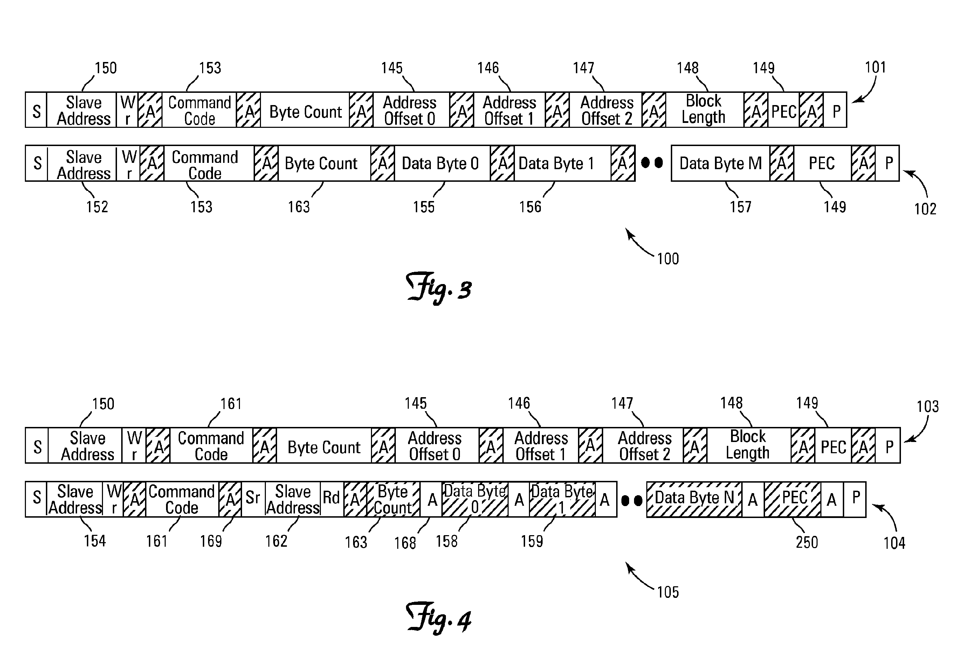

Figures 3-5 are block diagrams of embodiments of data packets transferred in a router in accordance with the present invention. The structure of the data packets reformatted by the router 30 or SMBus port router 130 according the SMBus protocol is shown in Figures 3-5. For the exemplary data packets shown in Figures 3-5, the boxes representative of data fields, for example data byte field 158 in Figure 4, are hatched to indicate the data is sent from the slave to the master. Likewise, the unhatched boxes, for example slave address field 150 of Figure 3, indicate the data is sent from the master to the slave.

If the control processor 20 initiates the data packet, the control processor 20 is the master and the targeted peripheral component is the slave. If one of the plurality of peripheral components 55 initiates the data packet, the initiating peripheral component 60, 61, 62, 63, 64, 65, 65, or 66 is the master and the control processor 20 is the slave. In one implementation of this latter embodiment, the slave address is the address of the control processor 20. In another implementation of this latter embodiment, the slave address is the address of the router 130 that is communicatively coupled to the control processor 20.

Figure 3 is a block diagram of a write command data packet 100 formatted according to a System Management Bus protocol in accordance with the present invention. The master, that is either SMBus port router 130 or the initiating peripheral component 60, 61, 62, 63, 64, 65, 65, or 66, transfers information for system writes using data packets 100 structured as a first SMBus Block Write 101 and a second SMBus Block Write 102. A SMBus Block Write is also referred to here as a "SMBus block write data packet" and a SMBus Block Read is also referred to here as a "SMBus block read data packet." Specifically, the write command data packet 100 includes a first SMBus Block Write 101 followed by a second SMBus Block Write102.

Figure 3 is a SMBus Address Block Write followed by a SMBus Data Block Write used to write system data into or from an internal location of the peripheral component 60, 61, 62, 63, 64, 65, 65, or 66 according to an adapted System Management Bus protocol in accordance with the present invention. The SMBus port router 130 transfers information for system writes using data packets 100 structured as a first SMBus Block Write 101 and a second SMBus Block Write 102. A SMBus Block Write 101 is also referred to here as a "SMBus block write data packet 101." A SMBus Block Read 102 is also referred to here as a "SMBus block read data packet 102." Specifically, the reformatted write command data packet 100 includes a first SMBus Block Write 101 followed by a second SMBus Block Write 102.

If the control processor 20 is transferring information for system writes using data packets 100 structured as a first SMBus Block Write 101 and a second SMBus Block Write 102 to one of the peripheral components 60, 61, 62, 63, 64, 65, 65, or 66, then the control processor 20 is the master and the peripheral component 60, 61, 62, 63, 64, 65, 65, or 66 is the slave during the completion of the data packet. This implementation is described in detail in the 11/469,176 Application, in which the router function as described herein is performed by a switch, and is not repeated here.

If one of the plurality of peripheral components 55 is transferring information for system writes using data packets 100 structured as a first SMBus Block Write 101 and a second SMBus Block Write 102 to the control processor 20, the peripheral component 60, 61, 62, 63, 64, 65, 65, or 66 is the master and the control processor 20 is the slave during the completion of the data packet 100.

When one of the plurality of peripheral components 55 is transferring information for system writes using data packets 100 structured as a first SMBus Block Write 101 and a second SMBus Block Write 102 to the control processor 20, then SMBus Block Write 101, also referred to here as "address block write 101," transfers the address of the router 130 or the control processor 20 in the slave address field 150. The second SMBus Block Write 102, also referred to here as "data block write 102," transfers data to the control processor 20 in the data byte fields 155, 156 and 157. More or fewer data byte fields can be used as required. The slave address field 152 in the SMBus Block Write 102 is the same as the slave address field 150 in the SMBus Block Write 101 and is either the address of router 130 or the address of the control processor 20.

If the peripheral component 60, 61, 62, 63, 64, 65, 65, or 66 is the master, a first portion of the address block, such as the upper four binary bits in the slave address fields 150 and 152, are decoded by the SMBus port router 130 to determine that the control processor 20 is being addressed. In one implementation of this embodiment, there is more than one control processor communicatively coupled to the peripheral components 60, 61, 62, 63, 64, 65, 65, and/or 66. In this case, the first portion of the address block, such as the upper four binary bits in the slave address fields 150 and 152, are decoded by the SMBus port router 130 to determine which of the communicatively coupled control processors 20 is being addressed. In another implementation of this embodiment, the first portion of the address block, such as the upper four binary bits in the slave address fields 150 and 152, are include the address of the SMBus port router 130 and the System Management Bus port router 130 decodes the address offset field 145 of the SMBus Block Write 101 to determine which communicatively coupled control processor is to complete the data packet 100.

The block length is added to the target address bytes embedded in the first SMBus Block Write 101 in the block length field 148. The control processor 20 decodes the data in the block length field 148 to determine how many data words are being accessed. The byte count for the SMBus Block Write 101 is always four. The control processor 20 checks the byte count received in the byte count field 163 in the data block write 102 with the block length received in the address block write 101 to validate the two transfers. The control processor 20 receives data in a packet error code (PEC) data field 149 as a checksum to protect the integrity of the data sent in the SMBus Block Write 101 and the SMBus Block write 102.

Figure 4 is a block diagram of a reformatted read command data packet 105 in accordance with the present invention. The targeted peripheral component 60, 61, 62, 63, 64, 65, or 66 transfers information for system reads to the SMBus port router 130 in response to receiving a data packet 105 that was initiated by the control processor 20. Likewise, the control processor 20 transfers information for system reads to the SMBus port router 130 in response to receiving a data packet 105 that was initiated by one of the plurality of peripheral components 55. The data packet 105 is structured as a SMBus Block Write 103 followed by a SMBus Block Read 104. The SMBus Block Write 103, also referred to here as "address block write 103," transfers an address of the slave in the slave address field 150. If one of the plurality of peripheral components 55 initiates the data packet 105, the control processor 20 is the slave while the data packet 105 is being completed. Likewise, if the control processor 20 initiates the data packet 105, the peripheral component 60, 61, 62, 63, 64, 65, or 66 is the slave while the data packet 105 is being completed.

The target address is sent using the SMBus Block Write 103, which is also referred to as an "address block write 103." The address transfer is implemented in the manner described above with reference to the system writes. The data being requested during a system read is transferred back to the master using a SMBus Block Read 104. This transfer is referred to as a "data block read 104."

The manner in which the targeted peripheral component transfers information for system reads to the SMBus port router 130 in response to receiving a data packet 105 was described in the described in detail in the 11/469,176 Application, in which the router function as described herein is performed by a switch, and is not repeated here.

When the one of the peripheral components 55 is the master, the control processor 20 transfers information for system reads to the SMBus port router 130 in response to receiving a data packet 105. In this case, a first portion of the address block, such as the upper four binary bits in the slave address fields 150 and 152, are decoded by the SMBus port router 130 to determine that the control processor 20 is being addressed. In one implementation of this embodiment, there is more than one control processor communicatively coupled to the peripheral components 60, 61, 62, 63, 64, 65, 65, and/or 66. In this case, the first portion of the address block, such as the upper four binary bits in the slave address fields 150 and 152, are decoded by the SMBus port router 130 to determine which of the communicatively coupled control processors 20 is being addressed. In another implementation of this embodiment, the first portion of the address block, such as the upper four binary bits in the slave address fields 150 and 152, are include the address of the SMBus port router 130 and the System Management Bus port router 130 decodes the address offset fields 145, 146 and/or 147 of the SMBus Block Write 103 to determine which communicatively coupled control processor is to complete the data packet 105.

The SMBus Block Read 104 transfers data from the control processor 20 to the SMBus port router 130 in the data byte fields 158 and 159. More or fewer data byte fields can be used as required.

The peripheral component uses the block length sent in the block length field 148 of SMBus Block Write 103 to determine how many words are requested to be read to the internal location address enclosed in the address offset field(s) 145, 146, and/or 147 of the SMBus Block Write.

After the control processor 20 sends an acknowledgement in data field 169 to acknowledge receipt of the command code 161 in the SMBus Block Read 104, the SMBus port router 130 resends the address of the router 130 or the control processor 20 in the second slave address field 162. The second slave address field 162 indicates to the router 130 or the control processor 20 that SMBus Block Read 104 is a read data packet.

The control processor 20 embeds the block length, which was sent in the block length field 148 of SMBus Block Write 103, in the byte count field 163 in the SMBus Block Read 104. The control processor 20 then transfers data from the control processor 20. The data is sent in the data byte fields 158 and 159 from the control processor 20 to the SMBus port router 130. The peripheral component 60, 61, 62, 63, 64, 65, or 66 compares the byte count in the byte count field 163 received in the SMBus Block Read 104 with the block length in the block length field 148 that is sent in the SMBus Block Write 103 to validate the data transfer. In this manner, information from the control processor 20 is sent to the router 130 in response to a transfer of the read command data packet 105.

In an exemplary case, the targeted peripheral component 63 sends the read command data packet 105 to the router 130 via port 141; the peripheral component 63 determines that the control processor 20 is targeted in the slave address field 150 of the SMBus Block Write 103; the control processor 20 responds to the receipt of the second slave address field 154 by sending data in the data byte fields 158 and 159 as part of the SMBus Block Read 104 in the command data packet 105 to the peripheral component 60, 61, 62, 63, 64, 65, or 66, which requested the data, via the router 130 port 142. The control processor 20 receives data in a PEC data field 149 as a checksum to protect the integrity of the data sent in the SMBus Block Write 103. The control processor 20 sends data in a PEC data field 250 as a checksum to protect the integrity of the data sent in the SMBus Block Read 104. In this manner, the protocol is checked by comparing data in a block length field of the first System Management Bus Block Write with data in a byte count field of the second System Management Bus Block Write.

In this manner, the SMBus Block Read 104 completes the transaction with the router 130. In one implementation of this embodiment, this process is implemented with router 30 described above with reference to Figure 1.

The SMBus protocols are adapted so that system interrogations are structured using a SMBus Block Read with a unique command code. This interrogation transaction is implemented in a SMBus Address Block Read. In this case, the byte count for the SMBus Address Block Read is always four.

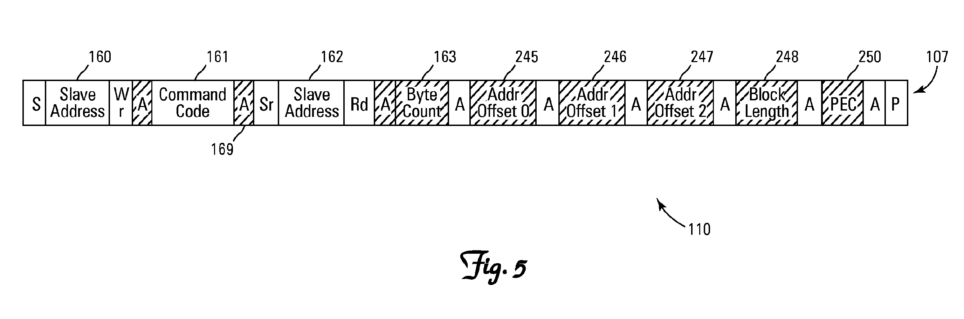

Figure 5 is a block diagram of a reformatted read command data packet 110 to transfer a command code from the control processor 20 via the SMBus port router 130 in a system interrogation in accordance with the present invention. In one implementation of this embodiment, the SMBus port router 130 reformats a read command as a data packet 110 structured as a SMBus Address Block Read 107 in order for the control processor 20 to interrogate the targeted peripheral component in the plurality of peripheral components 55. In another implementation of this embodiment, the SMBus port router 130 reformats a read command as a data packet 110 structured as a SMBus Address Block Read 107 in order for one of the plurality of peripheral components 55 to interrogate the control processor 20.

If one of the plurality of peripheral components 55 is interrogated with the read command data packet 110, the control processor 20 is the master while the data packet 110 is being completed. This implementation is described in detail in the 11/469,176 Application, in which the router function as described herein is performed by a switch, and is not repeated here.

If the control processor 20 is interrogated with the read command data packet 110, the peripheral component 60, 61, 62, 63, 64, 65, 65, or 66 in the plurality of peripheral components 55 that initiated the data packet 110 is the master while the data packet 110 is being completed. In such an implementation, the SMBus Address Block Read 107 includes an address of the router 130 or the control processor 20 in the slave address field 160 and in the slave address field 162. The SMBus Address Block Read 107 includes a selected command code in the command code field 161. After the control processor 20 sends the acknowledgement in data field 169 to acknowledge receipt of the command code 161, the peripheral component 60, 61, 62, 63,64,65,65, or 66 resends the address of the router 130 or the control processor in the slave address field 162 to indicate to the slave that SMBus Address Block Read 107 is a read data packet.

The control processor 20 transfers data indicative of the number of data bytes accessed by the control processor 20 in the previous SMBus transaction with the internal location 70, 71, 72, 80, 81, 82, 90, 91, or 92 of the respective peripheral component 60, 61, 62, 63, 64, 65, or 66. In one implementation of this embodiment, the control processor 20 transfers data indicative of the number of data bytes accessed by the control processor 20 in the previous SMBus transaction with the peripheral component 60, 61, 62, 63, 64, 65, or 66 that initiates the data packet 110.

The data indicative of the number of data bytes accessed in the control processor 20 in the previous SMBus transaction is sent from the control processor 20 to the peripheral component 61, 62, 63, 64, 65, 65, or 66 via the SMBus router 130 in the byte count field 163 of the SMBus Address Block Read 107.

In this manner, peripheral component 60, 61, 62, 63, 64, 65, 65, or 66, which initiated the data packet 110 receives the information indicative of how many bytes were accessed by the control processor 20 during a previous transaction is transferred via the SMBus router 130 to the respective peripheral component 60, 61, 62, 63, 64, 65, or 66 (Figure 2) and the SMBus Address Block Read 107 completes the transaction with the SMBus router 130.

The type of data in the response to the router is dependent upon the command code in the command code field 161. Some exemplary selected command codes are shown in Table 1 with the associated binary bytes assigned to the commands and the associated descriptions of the commands.

**Table 1. SMBus Command Code Byte**

| **Command** | **Assignment** | **Description** | **Rd/Wr** |
|---|---|---|---|
| Address Block Write | 1010 0101 | 24-Bit Address as Payload with Read/Write Block Length | Wr |
| Data Block Write | 0011 1100 | Payload of Data Bytes to be written to the address contained in a preceding Address Block Write | Wr |
| Data Block Read | 0110 0110 | Data read from the address specified in a preceding Address Block Write. Data to be sent as payload during a Block Read | Rd |
| Address Block Read | 1001 1001 | Read Back Payload Address and Block Length used in last 5MBus access | Rd |

In an exemplary case, the control processor 20 receives a SMBus Address Block Read 107 from one of the plurality of peripheral components 55 via the router 130. The SMBus Address Block Read 107 includes a selected command code "10011001" (Row 4 of Table 1) in the command code field 161 and the address of the control processor 20 in the slave address fields 160 and 162. In this exemplary case, the control processor 20 responds to the second slave address field 162 in the SMBus Address Block Read 107 by sending data in the byte count field 163 that indicates the number of data bytes being sent from the control processor 20 to the router 130. The control processor 20 then sends data in the address offset field(s) 245, 246, and/or 247 of the SMBus Address Block Read 107 that indicate the internal location 91 of the peripheral component 60 that is to receive the data from the control processor 20 was used in the previous SMBus transaction. In one implementation of this embodiment, control processor 20 sends data in the address offset field(s) 245, 246, and/or 247 of the SMBus Address Block Read 107 that indicate the internal location 91 of the peripheral component 60 that received data from the control processor 20 during the previous SMBus transaction. The control processor 20 then sends data in the Block Length field 248 to indicate the number of data bytes accessed in the control processor 20 during the previous SMBus transaction. The control processor 20 then sends a PEC data field 250 as a checksum to the router 130 that is used to protect the integrity of the data sent in the SMBus Address Block Read 107. In one implementation of this embodiment, this process is implemented with router 30 described above with reference to Figure 1.

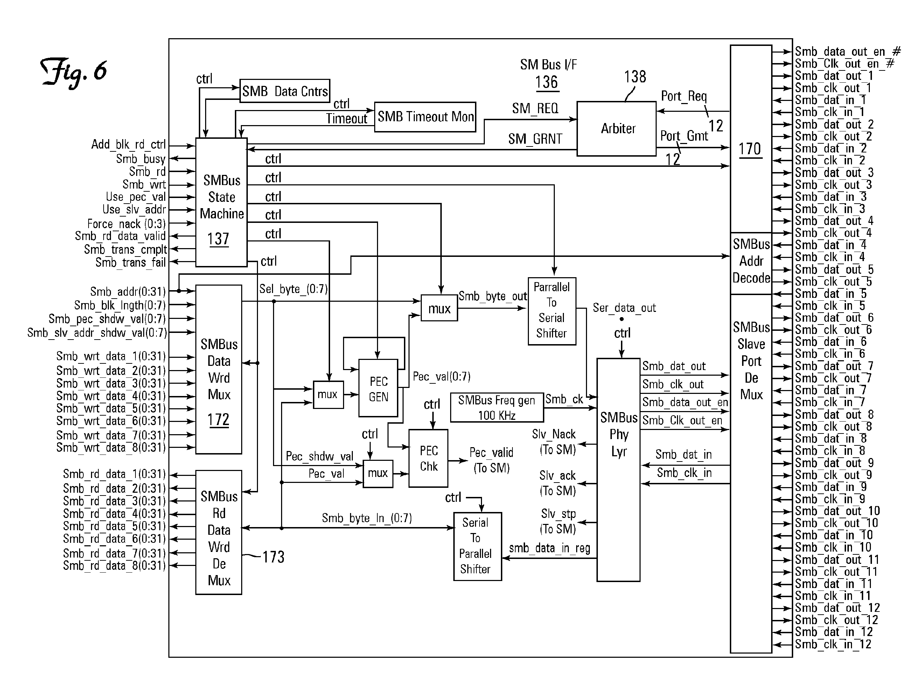

Figure 6 is a block diagram of one embodiment of a System Management Bus interface 136 in accordance with the present invention. In this exemplary case, the System Management Bus interface (SMBus I/F) 136 is for a SMBus port router 130 having twelve ports, such as ports 140-142 (Figure 2). The System Management Bus interface 136 includes the SMBus master/slave state machine 137 to control the functionality of the SMBus interface 136 during the reformatting of the data packets to form data packets 100, 105 and 110. The SMBus master/slave state machine 137 is communicatively coupled to a SMBus slave port demultiplexer 170, a SMBus data word multiplexer 172, a SMBus Read data word de-multiplexer 173 and an arbiter 138 to control whether the SMBus interface 136 recognizes a peripheral component or a control processor as the master during the completion of a data packet. Thus, the arbiter 13 8 allows either the control processor 20 or one of the plurality of peripheral components 55 to control the SMBus master/slave state machine 137 while a data packet is being completed. The SMBus slave port demultiplexer 170 is communicatively coupled to the ports, such as ports 140-142 (Figure 2).

An exemplary list of signal names and associated descriptions that are implemented in the SMBus interface 136 is shown in Table 2. The SIGNAL NAME column of Table 2 includes the signals indicated in the embodiment of the SMBus interface 136 for twelve ports shown in Figure 6. The DESCRIPTION column includes a description of the function of the each signal and the valid numbers of bytes, as necessary, for each signal.

**Table 2: SMBus Interface Signal List**

| **SIGNAL NAME** | **DESCRIPTION** |
|---|---|
| SMB_RD_DATA_#(0:31) | Eight 32-bit Read Data Words received from a SMBus Slave Device and stored in internal Registers |
| SMB_WRT_DATA_#(0:31) | Eight 32-bit Write Data Words intended for a SMBus Port |
| SMB_ADDR(0:31) | 32 bit Address intended for SMBus Port |
| SMB_BLK_LNGTH(0:7) | 8 bit Block length indicates number of bytes to transfer. Valid numbers are 4, 8, 12, 16, 20, 24, 28, and 32. |
| SMB_PEC_SHDW_VAL(0:7) | invalid 8-bit Packet Error Code (PEC) value used for testing purposes |
| SMB_SLV_ADDR_SHDW_VA L(0:7) | invalid 8-bit Slave Address used for testing purposes |
| USE_PEC_VAL | Test Signal indicates SMBus to use invalid PEC value |
| USE_SLV_ADDR | Test Signal indicates SMBus to use invalid Slave Address |
| FORCE_NACK(0:3) | Test Signals used to force SMBus NACK events during reads. |
| SMB_RD | Read control |
| SMB_WRT | Write Control |
| SMB_BUSY | Signal indicates SMBus port is busy |
| SMB_RD_DATA_VALID | Signal indicates SMBus Data is Valid |
| SMB_TRANS_CMPLT | Signal indicates SMBus transaction is complete |
| SMB_TRANS_FAIL | Signal indicates SMBus transaction failed |
| SMB_DAT_OUT_# (#=1-12) | SMBus Data Out Port # signal |
| SMB_CLK_OUT_# (#=1-12) | SMBus Clock Out Port # signal |
| SMB_DAT_IN_# (#=1-12) | SMBus Data Out Port # signal |
| SMB_CLK_IN_# (#=1-12) | SMBus Clock Out Port # signal |
| SMB_OE_N | SMBus Port Bi-Dir control |

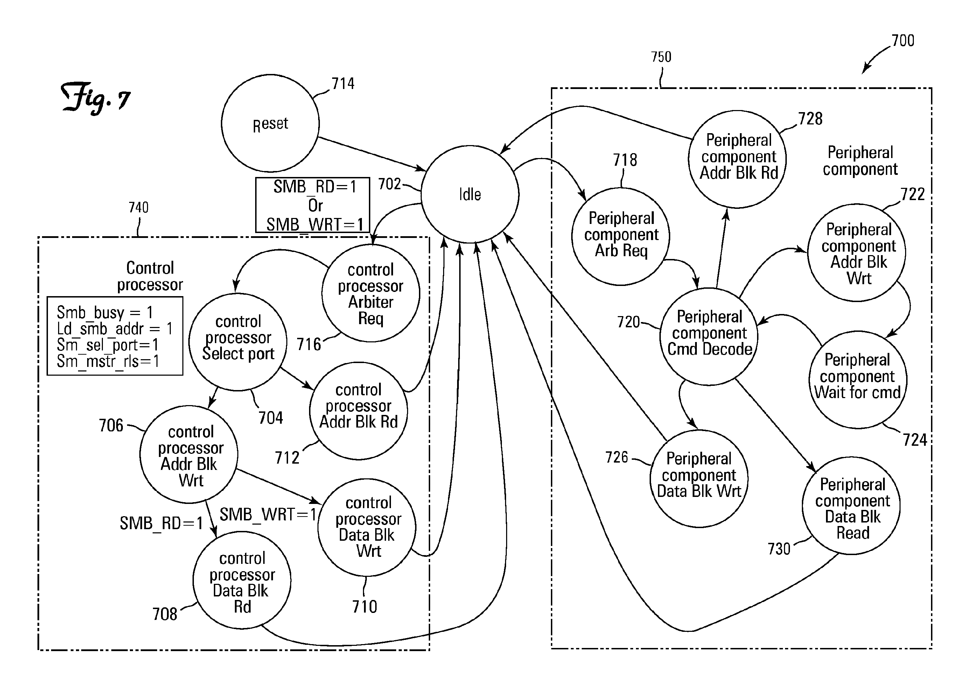

Figure 7 is a flow diagram 700 of one embodiment of a System Management Bus master/slave state machine in accordance with the present invention. The flow is described for an implementation in which the SMBus state machine is the SMBus master/slave state machine 137 shown in the SMBus interface 136 of Figure 6. A reset (block 714) puts the SMBus master/slave state machine 137 into the reset mode. The SMBus State Machine then enters IDLE after reset or after completing a transaction. The flow of the SMBus master/slave state machine 137 proceeds in within the dashed box 740 if the control processor 20 initiates the data packet. In this case, the control processor 20 is the master while the data packet is completed. The flow of the System Management Bus master/slave state machine 137 proceeds in within the dashed box 750 if one of the peripheral components 60, 61, 62, 63, 64, 65, 65, or 66 in the plurality of peripheral components 55 initiates the data packet. In this case, the initiating peripheral component 60, 61, 62, 63, 64, 65, 65, or 66 is the master while the data packet is completed.

When the SMBus master/slave state machine 137 is in IDLE (block 702), the SMBus master/slave state machine 137 outputs signals, for example, Sm_busy=0, to indicate that the SMBus master/slave state machine 137 is in the idle state. The control processor arbiter request is received (block 716) when a System Management Bus_RD=1 or SMB_WRT=1 signal is received at the SMBus master/slave state machine 137 from the control processor 20. A port is selected (block 704) by the SMBus master/slave state machine 137. The SMBus master/slave state machine 137 outputs signals to indicate it is busy (Smb_busy = 1) and outputs signals to control which port is selected (Ld_smb_addr =1, Sm_sel_port=1), and to indicate the direction of the data flow (Sm_mstr_rls=1).

An address block write data packet 101 (Figure 3) or address block write data packet 103 Figure 4) is formed (block 706). If a read command System Management Bus_RD=1 was received at the SMBus master/slave state machine 137, the flow proceeds from block 706 to block 708 and a data block read data packet 104 is formed to follow the write data packet 103 that was formed at block 706. The address block read data packet 105 (Figure 4) is received by the peripheral component 60, 61, 62, 63,64,65,65, or 66. The SMBus master/slave state machine 137 returns to the IDLE (block 702) upon completion of the address block read data packet 105.

If a write command SMB_WRT=1 was received at the SMBus master/slave state machine 137, the flow proceeds from block 706 to block 710 and a second data block write data packet 102 (Figure 3) is formed to follow the first write data packet 101 that was formed at block 706. The address block read data packet 100 (Figure 3) is received by the peripheral component 60, 61, 62, 63, 64, 65, 65, or 66. The SMBus master/slave state machine 137 returns to the IDLE (block 702) upon completion of the address block read data packet 100.

If an Address Block Read packet 107 (Figure 5) was initiated at the SMBus master/slave state machine 137, the flow proceeds from block 704 to block 712 and reformatted read command data packet 110 structured as a SMBus Block Read 107 (Figure 5) is formed. The address block read data packet 107 (Figure 5) is received by the peripheral component 60, 61, 62, 63, 64, 65, 65, or 66. The SMBus master/slave state machine 137 returns to the IDLE (block 702) upon completion of the data block write data packet.

The peripheral component arbiter request is received (block 718) a slave address is received at the SMBus master/slave state machine 137 from one of the peripheral components 60, 61, 62, 63, 64, 65, 65, or 66. The slave address can be received from one of the peripheral components 60, 61, 62, 63, 64, 65, 65, or 66 in the plurality of peripheral components 55 in the slave address field 150 of data packet 100 (Figure 3) or 105 (Figure 4) or in the slave address field 160 of data packet 110 (Figure 5. Then the peripheral component command (received in command code fields 153, 151 or 151 of SMBus block write 101 (Figure 3) or SMBus Block Write 103 (Figure 4) or SMBus Address Block Read 107 (Figure 5), respectively, is decoded (block 720) by the SMBus master/slave state machine 137.

The flow proceeds to block 722, if the decoded command code field indicates either and address block write data packet 101 (Figure 3) or address block write data packet 103 (Figure 4) is to be formed. Address block write data packet 101 and address block write data packet 103 are identically structured. At block 722, the data packet 101 (Figures 3) or data packet 103 (Figure 4) is formed. The flow proceeds to block 724 and the SMBus master/slave state machine 137 waits to receive the next peripheral component command. When the next command is received (after the data packet 101 (Figures 3) or data packet 103 (Figure 4) is completed) the flow proceeds to block 720, where the peripheral component command is decoded. If the command code is command code field 161, the flow proceeds to block 730 and a peripheral component data block read data packet, such as, SMBus Block Read 104 is formed by the SMBus master/slave state machine 137. The SMBus master/slave state machine 137 returns to the IDLE (block 702) upon completion of the SMBus Block Read 104.

If the command code received at block 724 is command code field 153, the flow proceeds to block 726 and a peripheral component data block read data packet, such as, SMBus Block Write 102 is formed by the SMBus master/slave state machine 137. The SMBus master/slave state machine 137 returns to the IDLE (block 702) upon completion of the SMBus Block Write 102.

From block 720, the flow proceeds to block 728, if the decoded command code field indicates the address block read data packet 107 (Figure 5) is to be formed. At block 728, the address block read data packet 107 (Figure 5) is formed. The SMBus master/slave state machine 137 returns to the IDLE (block 702) upon completion of the SMBus Block Write 102.

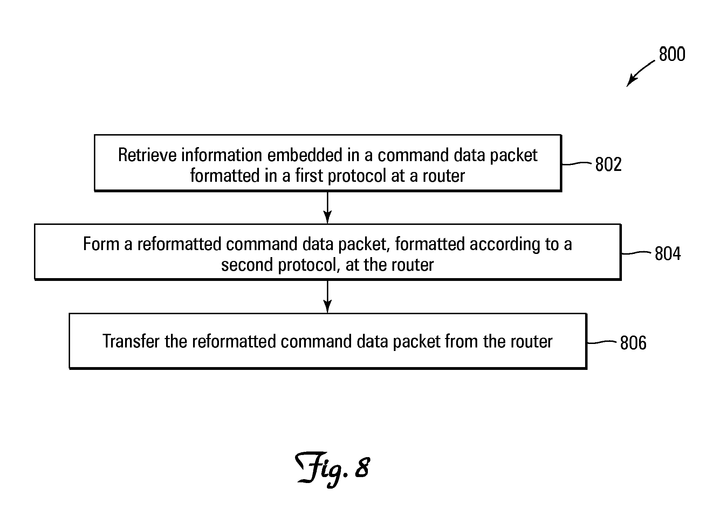

Figure 8 is a flow diagram of one embodiment of a method 800 of sending data packets between a control processor 20 and peripheral components 60-66 in accordance with the present invention.

At block 802, information embedded in a command data packet formatted in a first protocol is retrieved at a router. The embedded information includes at least one of an address, a command code, a byte count and an address offset. In one implementation of this embodiment, the SMBus port router 130 retrieves the command data packet formatted in a first protocol. In one implementation of this embodiment, the first protocol is a Spacewire protocol, Rapid IO, or RS232 Data Packet.

At block 804, a reformatted command data packet is formed according to a second protocol. The reformatted command data packet, such as data packets 100, 105 or 110 shown in Figures 3, 4 or 5, respectively, includes the retrieved information. In one implementation of this embodiment, the SMBus port router 130 forms the reformatted command data packet according to the second protocol.

At block 806, the reformatted command data packet is transferred from the router, such as SMBus port router 130.

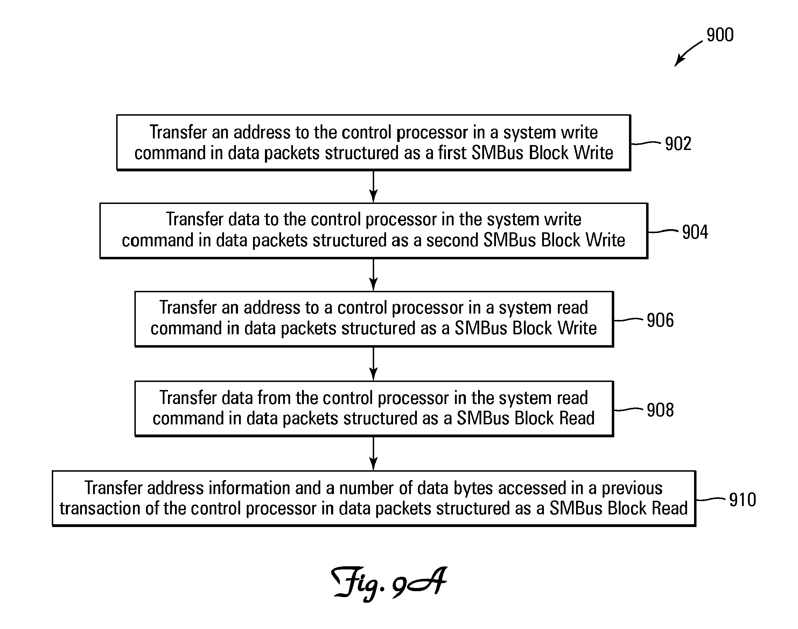

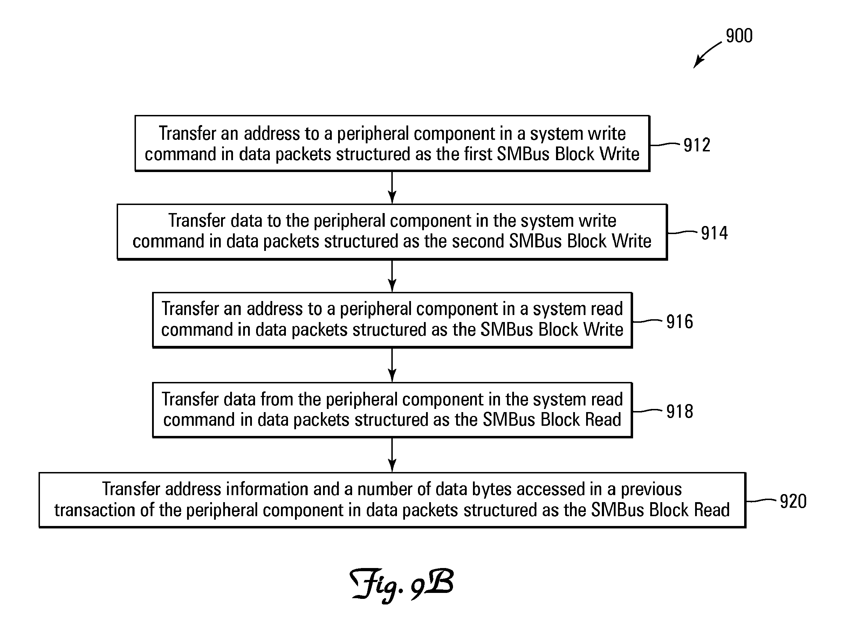

Figures 9A-9B are flow diagrams of one embodiment of a method 900 of forming a reformatted command data packet at the router in accordance with the present invention. Blocks 902-910 in Figure 9A are followed by blocks 912-920 in Figure 9B. Blocks 902-910 describe the method of forming a reformatted command data packet at the router in which the peripheral component is the master. Blocks 912-920 describe the method of forming a reformatted command data packet at the router in which the control processor is the master. In this implementation of method 900, the first protocol is at least one of a Spacewire protocol, Rapid IO, RS232 Data Packet, and the second protocol is a System Management Bus protocol.

As shown in Figure 9A at block 902, an address is transferred to the control processor in a system write command in data packets structured as a first SMBus Block Write. In one implementation of this embodiment, the SMBus port router 130 transfers the address to the control processor 20 in a system write command in data packets 101 structured as a first SMBus Block Write

At block 904, data is transferred to the control processor in the system write command in data packets structured as a second SMBus Block Write. In one implementation of this embodiment, the SMBus port router 130 transfers data to the control processor 20 in the system write command using data packets structured as the second SMBus Block Write 102. The data packet 100 (Figure 3) is completed by the processes of blocks 902 and 904 in the case in which the peripheral component is the master.

At block 906, an address is transferred to a control processor in a system read command in data packets structured as a SMBus Block Write. In one implementation of this embodiment, the SMBus port router 130 transfers an address to a control processor 20 in a system read command using data packets structured as the SMBus Block Write 103.

At block 908, data is transferred from the control processor in the system read command in data packets structured as a SMBus Block Read. In one implementation of this embodiment, the SMBus port router 130 transfers data from the control processor 20 in the system read command using data packets structured as the SMBus Block Read 104. The data packet 105 (Figure 4) is completed by the processes of blocks 906 and 908 in the case in which the peripheral component is the master.

As shown in Figure 9B at block 910, address information and a number of data bytes accessed in a previous transaction of the control processor are transferred in data packets structured as a SMBus Block Read. In one implementation of this embodiment, the SMBus port router 130 transfers address information and a number of data bytes accessed in a previous transaction of the control processor in data packets structured as a SMBus Block Read 107.

At block 912, an address is transferred to the peripheral component in a system write command in data packets structured as a first SMBus Block Write. In one implementation of this embodiment, the SMBus port router 130 transfers the address to the peripheral component 60, 61, 62, 63, 64, 65, or 66 in a system write command in data packets 101 structured as a first SMBus Block Write.

At block 914, data is transferred to the peripheral component in the system write command in data packets structured as a second SMBus Block Write. In one implementation of this embodiment, the SMBus port router 130 transfers data to the peripheral component 60, 61, 62, 63, 64, 65, or 66 in the system write command in data packets structured as a second SMBus Block Write 102. The data packet 100 (Figure 3) is completed by the processes of blocks 910 and 912 in the case in which the peripheral component is the slave.

At block 916, an address is transferred to a peripheral component in a system read command in data packets structured as a SMBus Block Write. In one implementation of this embodiment, the SMBus port router 130 transfers an address to a peripheral component 60, 61, 62, 63, 64, 65, or 66 in a system read command in data packets structured as a SMBus Block Write 103.

At block 918, data is transferred from the peripheral component in the system read command in data packets structured as a SMBus Block Read. In one implementation of this embodiment, the SMBus port router 130 transfers data from the peripheral component 60, 61, 62, 63, 64, 65, or 66 in the system read command using data packets structured as a SMBus Block Read 104. The data packet 105 (Figure 4) is completed by the processes of blocks 916 and 918 in the case in which the peripheral component is the slave.

At block 920, address information and a number of data bytes accessed in a previous transaction of the peripheral component are transferred in data packets structured as a SMBus Block Read. In one implementation of this embodiment, the SMBus port router 130 transfers address information and a number of data bytes accessed in a previous transaction of the peripheral component 60 in data packets structured as a SMBus Block Read 107. In another implementation of this embodiment, the SMBus port router 130 transfers address information and a number of data bytes accessed in a previous transaction of an internal location, such as internal location 70, of a peripheral component, such as peripheral component 60, in data packets structured as a SMBus Block Read 107.

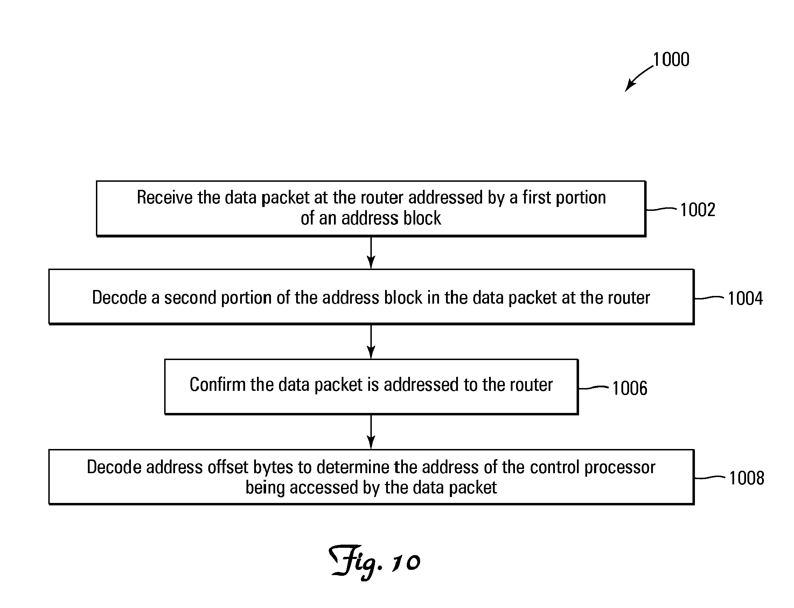

Figure 10 is a flow diagram of one embodiment of a method 1000 of receiving a reformatted data packet at a peripheral component in accordance with the present invention.

At block 1002, the data packet is received at the router addressed by a first portion of an address block. In one implementation of this embodiment, the SMBus port router 130 receives the data packet addressed by a first portion of the slave address field 150.

At block 1004, a second portion of the address block in the data packet is decoded at the router. In one implementation of this embodiment, the SMBus port router 130 decodes a second portion of the slave address field 150 in the data packet 101. In one implementation of this embodiment, the second portion of the address block is the last three bits in the slave address field 150.

At block 1006, the router confirms the data packet is addressed to the router. The confirmation is based on the second portion of the address block that was decoded during block 1004.

At block 1008, the router decodes address offset bytes to determine the address of the control processor being accessed by the data packet. In one implementation of this embodiment, the SMBus port router 130 decodes at least one address offset block 145-147 to determine the address of the control processor being accessed by the data packet.

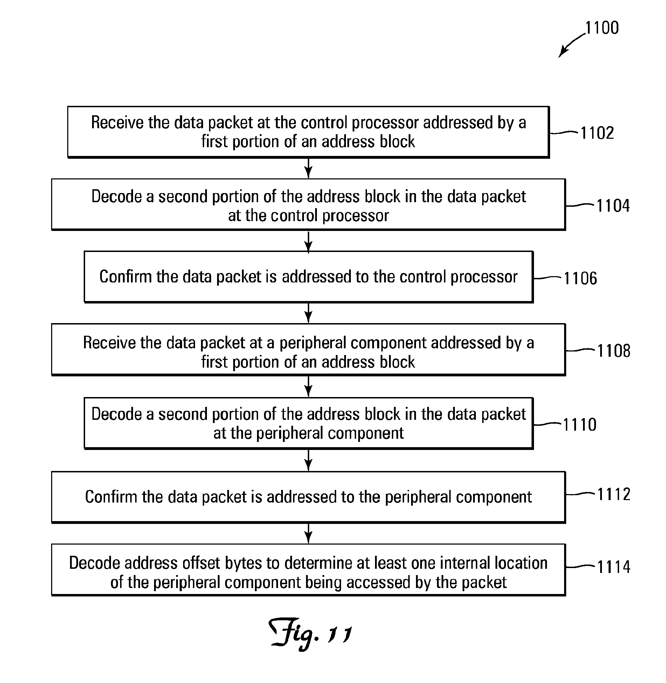

Figure 11 is a flow diagram of one embodiment of a method 1100 of receiving a reformatted data packet at a slave in accordance with the present invention.

At block 1102, the data packet is received at the control processor addressed by a first portion of an address block. In one implementation of this embodiment, the control processor 20 receives the data packet, such as data packet 100, addressed by a first portion of an address block, such as slave address field 150 of SMBus Block Write 101 (Figure 3).

At block 1104, a second portion of the address block in the data packet is decoded at the control processor. In one implementation of this embodiment, the control processor 20 decodes a second portion of the address block such as slave address field 150 of SMBus Block Write 101 (Figure 3).

At block 1106, the control processor confirms the data packet is addressed to the control processor. In one implementation of this embodiment, the control processor 20 confirms the SMBus Block Write 101 is addressed to the control processor 20.

At block 1108, the data packet is received at a peripheral component addressed by a first portion of an address block. In one implementation of this embodiment, the peripheral component, such as peripheral component 63, receives the data packet 100 since the peripheral component 63 is addressed by a first portion of the address block.

At block 1110, a second portion of the address block in the data packet is decoded at the peripheral component. In one implementation of this embodiment, the peripheral component such as peripheral component 63, decodes a second portion of the address block in the data packet 100.

At block 1112, the peripheral component confirms that the data packet is addressed to the peripheral component receiving the data packet. In one implementation of this embodiment, the peripheral component 63 confirms the data packet 100 is addressed to the peripheral component 63.

At block 1114, the peripheral component decodes address offset bytes to determine at least one internal location of the peripheral component being accessed by the data packet. In one implementation of this embodiment, the peripheral component 63 decodes address offset bytes 145-147 to determine at least one internal location 80-82 of the peripheral component 63 is being accessed by the data packet 100.

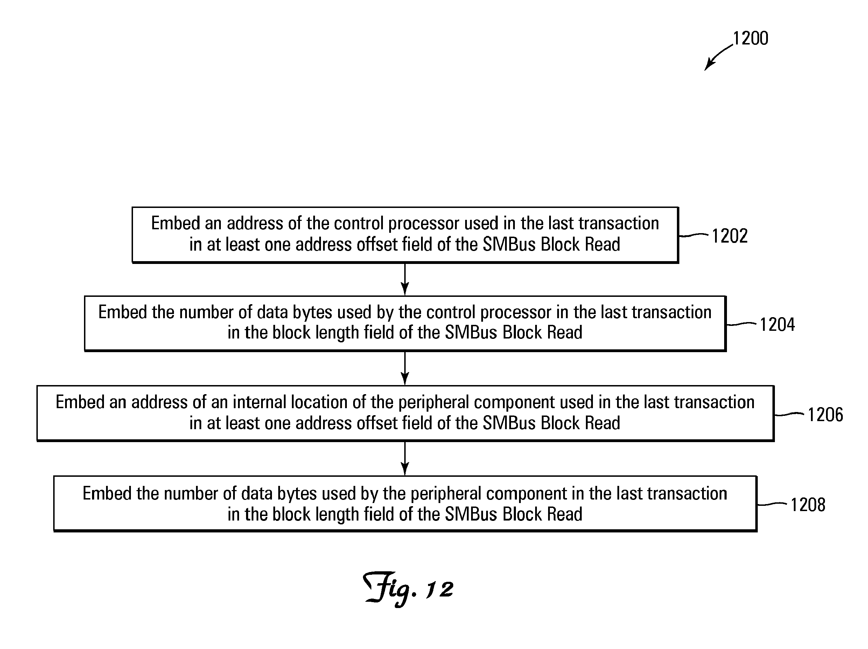

Figure 12 is a flow diagram of one embodiment of a method 1200 of transferring address information in accordance with the present invention. In method 1200, the SMBus Block Read is an interrogation data packet, in which the address information and a number of data bytes accessed in a previous transaction of the slave are transferred in data packets structured as the SMBus Block Read.

At block 1202, an address of the control processor used in the last transaction is embedded in at least one address offset field of the SMBus Block Read. In one implementation of this embodiment, the address of the control processor 20 used in the last transaction is embedded in at least one address offset field 245-247 of the SMBus Block Read 107 (Figure 5).

At block 1204, the number of data bytes used by the control processor in the last transaction is embedded in the block length field of the SMBus Block Read. In one implementation of this embodiment, the number of data bytes used by the control processor 20 in the last transaction is embedded in the block length field 248 of the SMBus Block Read 107 (Figure 5). Blocks 1202 and 1204 are implemented when the peripheral component is a master and initiates the interrogation of the control processor.

At block 1206, an address of an internal location of the peripheral component used in the last transaction is embedded in at least one address offset field of the SMBus Block Read. In one implementation of this embodiment, the address of an internal location 80 of the peripheral component 63 used in the last transaction is embedded in at least one address offset field 245-248 of the SMBus Block Read 107.

At block 1208, the number of data bytes used by the peripheral component in the last transaction in the block length field of the SMBus Block Read. In one implementation of this embodiment, embedding the number of data bytes used by the peripheral component 63 in the last transaction is embedded in the block length field 248 of the SMBus Block Read 107. Blocks 1206 and 1208 are implemented when the control processor is a master and initiates the interrogation of the peripheral component.

Thus, the system 10 (Figure 1) and system 11 (Figure 2) are able to use computer-readable medium having computer-executable instructions, e.g., software, firmware or other program code, for performing a method comprising: embedding an address of a control processor in address offset fields having a length of up to seven bits in a first System Management Bus Block Write at a peripheral component; completing a system transaction with the first System Management Bus Block Write and a second System Management Bus Block Write so that data is sent between a peripheral component and the control processor to complete the system transaction; embedding the data word payload in a range of four data byte fields to thirty-two data byte fields in the second System Management Bus Block Write so that the data word payload is written to the control processor; and checking the protocol by comparing data in a block length field of the first System Management Bus Block Write with data in a byte count field of the second System Management Bus Block Write. The data word payload has a length of up to thirty-two bytes. In this implementation, the master (peripheral component) initiates a system write command.

In another implementation of this embodiment, the system 10 (Figure 1) and system 11 (Figure 2) are able to use instructions, e.g., software, firmware or other program code, for performing a method comprising: embedding an address of a control processor in address offset fields having a length of up to seven bits in a System Management Bus Block Write; completing a system transaction with the System Management Bus Block Write and a System Management Bus Block Read so that data is sent between a peripheral component and the control processor to complete the system transaction; embedding an address of the control processor in a slave address field preceding a command code field and in a slave address field following the command code field of the System Management Bus Block Read; embedding the data word payload in a range of four data byte fields to thirty-two data byte fields in the System Management Bus Block Read, so the data word payload is sent from the control processor responsive to the second address in the System Management Bus Block Read; and checking the protocol by comparing data in a block length field of the first System Management Bus Block Write with data in a byte count field of the second System Management Bus Block Write. In this implementation, the master (peripheral component) initiates a system read command.

In yet another implementation of this embodiment, the system 10 (Figure 1) and system 11 (Figure 2) are able to use instructions, e.g., software, firmware or other program code, for performing a method comprising: embedding an address of an internal location of the peripheral component in address offset fields having a length of up to seven bits in the first System Management Bus Block Write; and completing a system transaction with the System Management Bus Block Write and a second System Management Bus Block Write so that data is sent between a control processor and the peripheral component to complete a system transaction; embedding the data word payload in a range of four data byte fields to thirty-two data byte fields in the second System Management Bus Block Write, so that the data word payload is written to the peripheral component; and checking the protocol by comparing data in a block length field of the first System Management Bus Block Write with data in a byte count field of the second System Management Bus Block Write. In this implementation, the master (control processor) initiates a system write command.

In yet another implementation of this embodiment, the system 10 (Figure 1) and system 11 (Figure 2) are able to use instructions, e.g., software, firmware or other program code, for performing a method comprising: embedding an address of an internal location of the peripheral component in address offset fields having a length of up to seven bits in the System Management Bus Block Write; completing a system transaction with the System Management Bus Block Write and the System Management Bus Block Read so that data is sent between a control processor and the peripheral component to complete a system transaction; embedding an address of the peripheral component in a slave address field preceding a command code field and in a slave address field following the command code field of the System Management Bus Block Read; and embedding the data word payload in a range of four data byte fields to thirty-two data byte fields in the System Management Bus Block Read, so that the data word payload is sent from the peripheral component responsive to the second address in the System Management Bus Block Read; and checking the protocol by comparing data in a block length field of the first System Management Bus Block Write with data in a byte count field of the second System Management Bus Block Write. In this implementation, the master (control processor) initiates a system read command.

The protocol described in the 11/469,207 Application to form the data packets at a switch is extendable to the formation of data packets by the router in present invention as is understandable by one of ordinary skill in the art.

## Claims

1. A method of sending data packets (100) between a control processor (20) and a plurality of peripheral components (55), the method comprising:
retrieving information embedded in a command data packet formatted in a first protocol at a router (130);
forming a reformatted command data packet at the router, the reformatted command data packet formatted according to a second protocol, the reformatted command data packet including the retrieved information; and
transferring the reformatted command data packet from the router.

2. The method of claim 1, wherein the first protocol is at least one of a Spacewire protocol, Rapid IO, RS232 Data Packet, and the second protocol is a System Management Bus protocol, wherein forming a reformatted command data packet at the router comprises further comprising:
transferring an address to the control processor (20) in a system write command in data packets structured as a first SMBus Block Write (101);
transferring data to the control processor in the system write command in data packets structured as a second SMBus Block Write (102);
transferring an address to a control processor in a system read command in data packets structured as a SMBus Block Write (103);
transferring data from the control processor in the system read command in data packets structured as a SMBus Block Read (104); and
transferring address information and a number of data bytes accessed in a previous transaction of the control processor in data packets structured as a SMBus Block Read (107).

3. The method of claim 2, further comprising:
receiving the data packet (101) at the router (130) addressed by a first portion of an address block (150);
decoding a second portion of the address block in the data packet at the router; and
confirming the data packet is addressed to the router.

4. The method of claim 3, further comprising:
decoding address offset bytes (145) to determine the address of the control processor (20) being accessed by the data packet (101).

5. The method of claim 2, further comprising:
receiving the data packet (101) at the control processor (20) addressed by a first portion of an address block (150);
decoding a second portion of the address block in the data packet at the control processor; and
confirming the data packet is addressed to the control processor.

6. The method of claim 2, wherein transferring address information and a number of data bytes accessed in a previous transaction of the control processor in data packets structured as a SMBus Block Read (107) comprises transferring an interrogation data packet, the method further comprising:
embedding an address of the control processor (20) used in the last transaction, the address of the control processor embedded in at least one address offset field (245) of the SMBus Block Read; and
embedding the number of data bytes used by the control processor in the last transaction in the block length field (248) of the SMBus Block Read.

7. A computer-readable medium (238) having computer-executable instructions (239) for performing a method comprising:
embedding an address of a control processor (20) in address offset fields (145) having a length of up to seven bits in a System Management Bus Block Write (101); and
completing a system transaction with the System Management Bus Block Write and a second data packet (102) wherein data is sent between a peripheral component (60) and the control processor to complete a system transaction.

8. The medium (238) of claim 7, wherein the System Management Bus Block Write is a first System Management Bus Block Write (101) and the second data packet is a second System Management Bus Block Write (102), wherein the method performed by the medium having computer-executable instructions (239) further comprises:
embedding the data word payload in a range of four data byte fields to thirty-two data byte fields in the second System Management Bus Block Write, the data word payload having a length of up to thirty-two bytes, wherein the data word payload is written to the control processor (20).

9. The medium (238) of claim 8, wherein the method performed by the medium having computer-executable instructions (239) further comprises:
checking the protocol by comparing data in a block length field (148) of the first System Management Bus Block Write with data in a byte count field (163) of the second System Management Bus Block Write.

10. A router (130) comprising:
a controller interface (135) adapted to receive data packets formatted according to a first protocol from a control processor (20) and a peripheral component (60), wherein one of the control processor and the peripheral component is a master and wherein the other of the control processor and the peripheral component is the slave;
a System Management Bus interface (136) adapted to reformat the received data packets from the first protocol to a System Management Bus protocol;
a System Management Bus master/slave state machine (137) adapted to control the functionality of the bus interface; and
ports (140) communicatively coupled to peripheral components (55), wherein data packets formatted according to the System Management Bus protocol are one of transferred to the peripheral components via the ports and transferred from the peripheral components via the ports.
